# EUROPÄISCHE PATENTANMELDUNG

(11) **EP 2 101 067 A1**
(43) Veröffentlichungstag der Anmeldung: **16.09.2009**
(21) Anmeldenummer: 09154713.3
(22) Anmeldetag: 10.03.2009
(51) Int. Cl.: F15B 15/12, F16J 15/32, F16J 15/54

(54) **Scheibendichtung**

(30) Priorität: 15.03.2008 DE 102008014542
(71) Anmelder: ZF Friedrichshafen AG, 88038 Friedrichshafen (DE)
(72) Erfinder: Böttger, Christian, 96158, Birkach (DE)

(57) **Zusammenfassung**

Scheibendichtung, umfassend einen Dichtungsrahmen (3) mit einer Mehrzahl von Dichtflächen, die von mindestens einem innenliegenden Vorspannelement beaufschlagt werden, wobei das mindestens eine Vorspannelement (5,5a,5b) zumindest eine Kreisabschnittkontur aufweist, die an mindestens zwei benachten Innenseiten (7a-7d) der Dichtflächen (3a-3d) zur Anlage kommt.

## Beschreibung

Die Erfindung betrifft eine Scheibendichtung gemäß dem Oberbegriff von Patentanspruch 1.

Aus der DE 19 55 711 ist eine Scheibendichtung bekannt, die in der Fig. 3 eine Blattfeder als Vorspannelement aufweist. Ein derartiges Vorspannelement lässt sich als Bandmaterial sehr einfach herstellen, weist jedoch den erheblichen Nachteil auf, dass es nur zu einer Achse eine Vorspannung aufbringen kann. Deshalb kommt ein zweites Vorspannelement zur Anwendung. Unter dieser mehrteiligen Bauweise leidet der Montageaufwand erheblich.

In der DE 25 44 662 A1 werden als Vorspannelemente ebenfalls Blattfedern eingesetzt. Für eine allseitige Vorspannwirkung kommen mehrere Blattfedern zum Einsatz, so dass gleiche Nachteile auftreten, wie bei der DE 19 55 771.

Die EP 1 150 018 B1 offenbart eine Scheibendichtung, bei der das Vorspannelement von einem Stanzteil mit einem Schlitzprofil gebildet wird. Diese Scheibendichtung lässt sich sehr gut montieren, weist jedoch am Übergangsbereich zwei Dichtkanten des Dichtungsrahmens eine ungleichmäßige Vorspannung auf.

Die Aufgabe der vorliegenden Erfindung besteht darin, eine Scheibendichtung mit einer guten Vorspannfunktion und einer einfachen Montagefähigkeit zu realisieren.

Erfindungsgemäß wird die Aufgabe dadurch gelöst, das mindestens eine Vorspannelement zumindest eine Kreisabschnittkontur aufweist, die an mindestens zwei benachbarten Innenseiten der Dichtflächen zur Anlage kommt.

Über die Kreisabschnittkontur wird der Übergang zweier Dichtflächen besonders gut nach radial außen vorgespannt. Je nach Breiten-Längen-Verhältnis können auch drei Dichtflächen von der Kreisabschnittkontur vorspannt werden.

In weiterer vorteilhafter Ausgestaltung sind eine Mehrzahl von ringförmigen Vorspannelementen innerhalb des Dichtungsrahmens angeordnet. Je nach Länge der Scheibendichtung wird einfach ein Vorspannelement zusätzlich in den Dichtungsrahmen gepackt. Dadurch bleibt der Dichtungsrahmen sehr formflexibel.

Gemäß einem vorteilhaften Unteranspruch stehen die Vorspannelemente innerhalb einer Reihenanordnung im direkten Kontakt. Bei dieser Variante kann auf zusätzliche Übertragungselemente zwischen dem Vorspannelement und dem Dichtungsrahmen verzichtet werden.

Man kann auch vorsehen, dass die ringförmigen Vorspannelemente in einer Hauptachse tailliert ausgeführt sind. Die taillierte Form stellt einen Federspeicher dar, der Längenänderungen der Scheibendichtung auch in großem Umfang ausgleichen kann.

Bei einer Ausführungsform sind zwei Vorspannelement in einem Abstand innerhalb des Dichtungsrahmens zueinander angeordnet sind, wobei in dem Zwischenraum mindestens ein Übertragungselemente ausgeführt ist, das sich mit Schrägflächen an den Vorspannelementen abstützt. Diese Bauform ermöglichst besonders einfach die Verwendung von Standard-Vorspannelementen für verschiedenen Scheibendichtungslängenformate.

Um die Federrate bei vorgegebenem Abmessungen des Vorspannelements zu reduzieren, sind die Vorspannelemente geschlitzt ausgeführt. Dabei können ihre Enden in einem Freiraum an dem mindestens einen Übertragungselement auslaufen.

Die Enden der Vorspannelemente liegen dem mindestens einen Übertragungselement an und sorgen für eine weitere das mindestens eine Übertragungselement stützende Kraftkomponente.

Eine besonders montagefreundliche Variante zeichnet sich dadurch aus, dass die beiden Vorspannelemente einteilig ausgeführt sind, indem zwei Enden über einen Steg miteinander verbunden sind.

Um das gesamte Volumen des Vorspannelements maximal auszunutzen weist der Steg ein Wellenprofil auf.

Anhand der folgenden Figurenbeschreibung soll die Erfindung näher erläutert werden.

Es zeigt:
- Fig. 1: Scheibendichtung mit kreisringförmigen Vorspannelementen
- Fig. 2: Scheibendichtung mit taillierten Vorspannelementen
- Fig. 3: Scheibendichtung mit Übertragungselement
- Fig. 4: Scheibendichtung mit zwei geschlitzten ringförmigen Vorspannelementen
- Fig. 5: Scheibendichtung mit zwei geschlitzten Vorspannelementen in einteiliger Bauweise

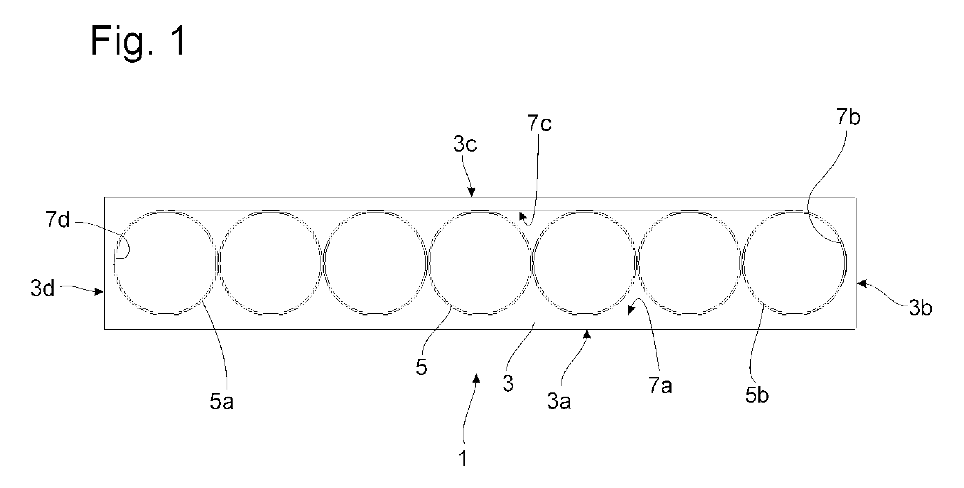

Die Fig. 1 zeigt eine Scheibendichtung 1 mit einem Dichtungsrahmen 3, der eine rechteckige Außenkontur mit 4 Dichtflächen 3a - 3d aufweist. Im Dichtungsrahmen innenliegend sind eine Mehrzahl von ringförmigen Vorspannelementen 5 angeordnet. Die Vorspannelemente werden in diesem Ausführungsbeispiel von geschlossenen Kreisringen gebildet, die direkt auf Innenseiten 7a - 7d des Dichtungsrahmens einwirken. Die Innenseiten 7b; 7d bilden eine Halbkreiskontur. Bei den beiden äußeren Vorspannelementen 5a; 5b kommen auf mindestens zwei benachbarte Innenseiten 7a - 7c; 7c - 7a eine Kreisabschnittkontur der Vorspannelemente 5a, 5b zur Anlage. Der Übergangsbereich zwei benachbarter Dichtflächen wird dadurch besonders gut vorgespannt. Die mittleren Vorspannelemente stützen die Dichtflächen 3a; 3c. Durch die Dimensionierung der Vorspannelemente kann eine flächige Anlage der mittleren Vorspannelemente an den Innenseiten 7a; 7c eingestellt werden. Alle Vorspannelemente 5 stehen im direkten gegenseitigen Kontakt.

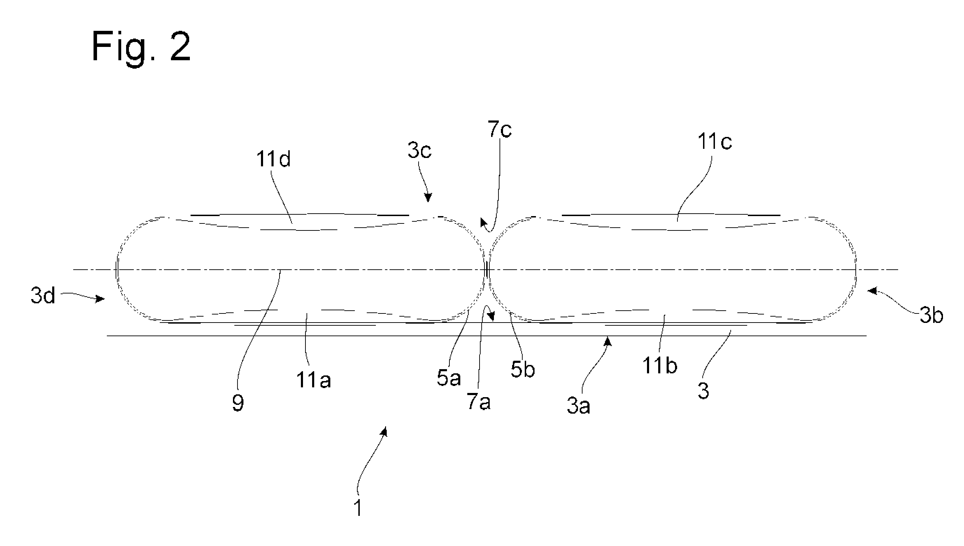

Die Variante nach Fig. 2 stellt eine Weiterentwicklung der Ausführung nach Fig. 1 dar. Anstatt einer Reihenanordnung einer Mehrzahl von Vorspannelementen 5 kommen nur zwei Vorspannelemente 5a; 5b zur Anwendung, die ebenfalls im direkten Kontakten miteinander stehen. In Richtung der Innenseiten 7b und 7d weisen die Vorspannelemente denselben Konturenverlauf auf wie in Fig. 1. Abweichend sind die Vorspannelemente 5a; 5b in der Fig. 2 in der Hauptachse 9 tailliert ausgeführt, so dass Freiräume 11a - 11d entstehen, die bei einer Längenausdehnung der Scheibendichtung 1 abnehmen, so dass die Vorspannelemente 5a; 5b großflächiger an den Innenseiten 7a; 7c anliegen und die Dichtflächen 3a; 3c entsprechend gleichmäßiger abstützen.

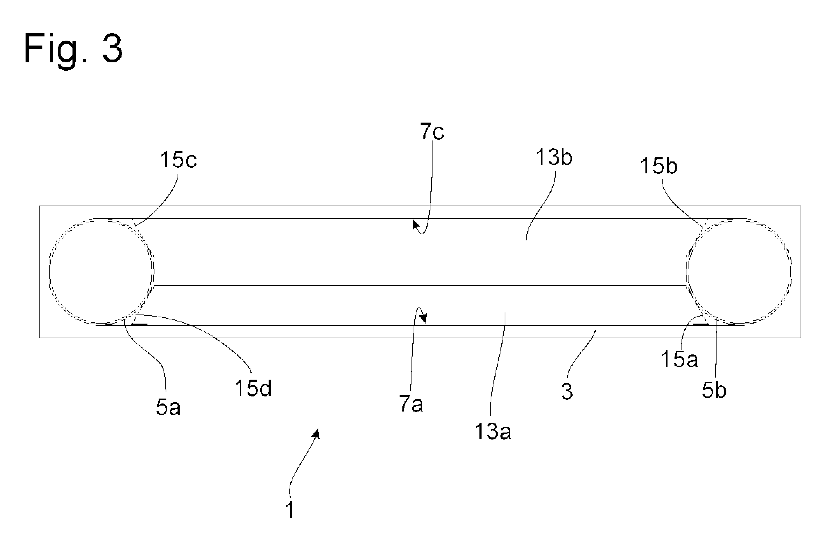

Die Fig. 3 zeigt eine Scheibendichtung 1, bei der die ringförmigen Vorspannelemente 5a; 5b in einem Abstand zueinander angeordnet sind. In einem Zwischenraum sind zwei parallele Übertragungselemente 13a, 13b angeordnet, die sich mit ihren schrägen Endflächen 15a - 15d auf den Vorspannelementen 5a; 5b abstützen. Die Vorspannelemente 5a; 5b bewirken in den Tragpunkten der streifenförmigen Übertragungselemente 13a: 13b eine nach außen gerichtete Kraftkomponente, die großflächig auf die Innenseiten 7a; 7c des Dichtungsrahmens 3 übertragen wird.

Die als geschlossener Ring ausgeführten Vorspannelemente 5 könne materialoptimiert von einem Rohrkörper auf die gewünschte Materialstärke abgestochen werden.

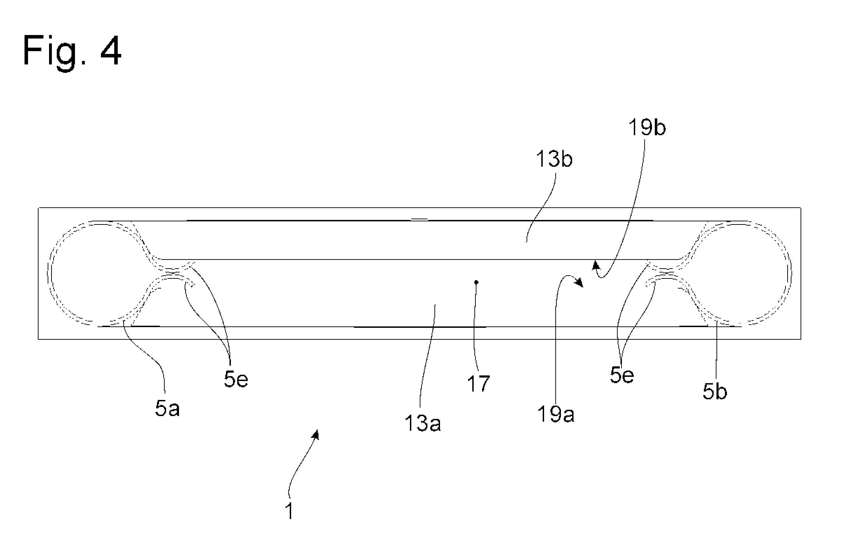

Die Fig. 4 basiert wiederum auf der Fig. 3. Der wesentliche Unterschied besteht darin, dass die Vorspannelemente 5a; 5b geschlitzt ausgeführt sind und dadurch in ihrer Federkraft leichter adaptierbar sind. Derartige Vorspannelemente könne aus einem Draht oder Band sehr leicht gebogen werden. Die Enden 5e der Vorspannelement 5a; 5b laufen in einen Freiraum 17 zwischen den beiden Übertragungselemente 13a; 13b aus und drücken zusätzlich an den Unterseiten 19a; 19b der Übertragungselemente 13a; 13b nach außen.

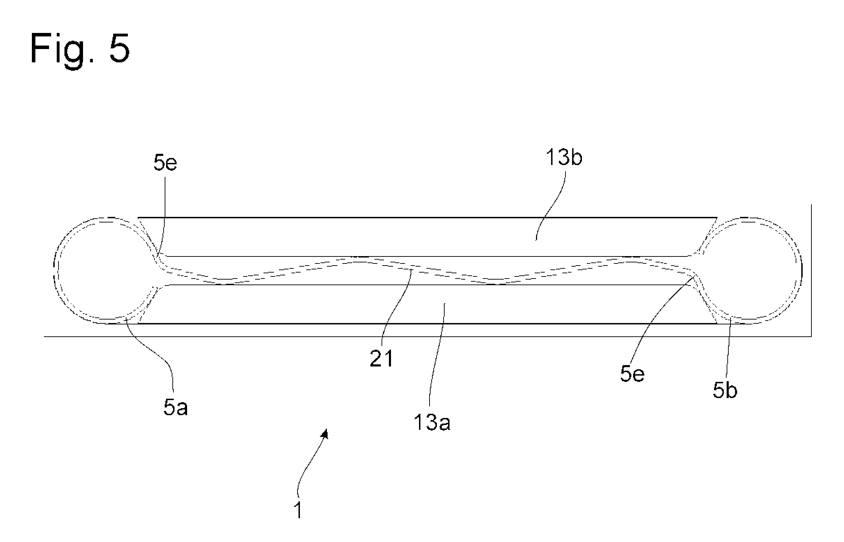

Eine besonders einfach zu montierende Variante zeigt die Fig. 5, die von der Fig. 4 abgeleitet ist. Als wesentliche Ergänzung ist ein Steg 21 anzusehen, der zwei Enden 5e der Vorspannelemente zusammenführt, so dass ein einteiliges Vorspannelement vorliegt. Der Steg 21 selbst weist ein Wellenprofil auf, das mehrfach an den Unterseiten 19a; 19b der Übertragungselemente 13a; 13b angreift.

## Patentansprüche

1. Scheibendichtung, umfassend einen Dichtungsrahmen mit einer Mehrzahl von Dichtflächen, die von mindestens einem innenliegenden Vorspannelement beaufschlagt werden,
**dadurch gekennzeichnet,**
**dass** das mindestens eine Vorspannelement (5; 5a; 5b) zumindest eine Kreisabschnittkontur aufweist, die an mindestens zwei benachten Innenseiten (7a - 7d) der Dichtflächen (3a - 3d) zur Anlage kommt.

2. Scheibendichtung nach Anspruch 1,
**dadurch gekennzeichnet,**
**dass** eine Mehrzahl von ringförmigen Vorspannelementen (5a; 5b) innerhalb des Dichtungsrahmens (3) angeordnet sind.

3. Scheibendichtung nach Anspruch 2,
**dadurch gekennzeichnet,**
**dass** die Vorspannelemente (5a; 5b) innerhalb einer Reihenanordnung im direkten Kontakt stehen.

4. Scheibendichtung nach Anspruch 2,
**dadurch gekennzeichnet,**
**dass** die ringförmigen Vorspannelemente (5a; 5b) in einer Hauptachse (9) tailliert ausgeführt sind.

5. Scheibendichtung nach Anspruch 1,
**dadurch gekennzeichnet,**
**dass** zwei Vorspannelement (5a; 5b) in einem Abstand innerhalb des Dichtungsrahmens (3) zueinander angeordnet sind, wobei in dem Zwischenraum mindestens ein Übertragungselement (13a; 13b) ausgeführt ist, das sich mit Schrägflächen (15a - 15d) an den Vorspannelementen (5a; 5b) abstützt.

6. Scheibendichtung nach Anspruch 1,
**dadurch gekennzeichnet,**
**dass** die Vorspannelemente (5a; 5b) geschlitzt ausgeführt sind,

7. Scheibendichtung nach Anspruch 6,
**dadurch gekennzeichnet,**
**dass** die Enden (5e) der Vorspannelemente (5a; 5b) in einem Freiraum (17) zwischen den beiden Übertragungselementen (13a; 13b) auslaufen.

8. Scheibendichtung nach Anspruch 7,
**dadurch gekennzeichnet,**
**dass** die Enden (5e) der Vorspannelemente (5a; 5b) an dem mindestens einen Übertragungselement (13a; 13b) anliegen.

9. Scheibendichtung nach Anspruch 7,
**dadurch gekennzeichnet,**
**dass** die beiden Vorspannelemente (5a; 5b) einteilig ausgeführt sind, indem zwei Enden (5e) über einen Steg (21) miteinander verbunden sind.

10. Scheibendichtung nach Anspruch 9,
**dadurch gekennzeichnet,**
**dass** der Steg (21) ein Wellenprofil aufweist.
